# EUROPÄISCHE PATENTSCHRIFT

(11) **EP 2 201 639 B1**
(45) Veröffentlichungstag und Bekanntmachung des Hinweises auf die Patenterteilung: **12.12.2012**
(21) Anmeldenummer: 08840683.0
(22) Anmeldetag: 07.10.2008
(51) Int. Cl.: H01M 2/10, H01M 10/50

(54) **BATTERIEMODUL**
BATTERY MODULE
MODULE DE BATTERIE

(30) Priorität: 11.10.2007 DE 102007049047; 29.07.2008 DE 102008040816; 20.08.2008 DE 102008041365
(43) Veröffentlichungstag der Anmeldung: 30.06.2010
(73) Patentinhaber: Robert Bosch GmbH, 70442 Stuttgart (DE)
(72) Erfinder: HAU, Wolfgang, 72555 Metzingen (DE); HOLZWARTH, Gerhard, 72793 Pfullingen (DE); GENDLIN, Boris, 70794 Filderstadt (DE); BOOTH, Jeff, Dunstable Massachusetts 01827 (US); KRAFT, Dieter, 70839 Gerlingen (DE); FASSNACHT, Jochen, 75365 Calw (DE); BARTENSCHLAGER, Ursula, 74629 Pfedelbach (DE); KERN, Rainer, 70174 Stuttgart (DE); NAMAN, Robert, Natick Massachusetts 01760 (US)
(86) Internationale Anmeldenummer: PCT/EP2008/063381
(87) Internationale Veröffentlichungsnummer: WO 2009/050065

(56) Entgegenhaltungen:
- EP-A- 1 309 019
- EP-A- 1 320 138
- DE-A1- 10 003 247
- DE-A1- 19 848 646
- US-B1- 7 045 236

## Beschreibung

Die Erfindung betrifft ein Batteriemodul, umfassend ein Gehäuse, wenigstens eine in dem Gehäuse angeordnete Batterie, wenigstens eine Einlassöffnung zum Einleiten eines Kühlfluids in das Gehäuse, wenigstens eine Auslassöffnung zum Ausleiten des Kühlfluids aus dem Gehäuse. Ferner betrifft die Erfindung ein Batteriemodulsystem.

### Stand der Technik

Batterien, z. B. Lithiumionenbatterien oder Zebra-Batterien, versorgen verschiedene Einrichtungen, z. B. Kraftfahrzeuge, Krankenhäuser oder Bohrmaschinen, mit elektrischem Strom. Im Allgemeinen werden mehrere Batterien in einem Gehäuse eingebaut und dadurch ein Batteriemodul gebildet. Batteriemodule haben den Vorteil, dass diese leichter mit einem Kühlfluid gekühlt und höhere elektrische Leistungen durch die Kombination mehrerer Batteriemodule zu einem Batteriemodulsystem einfach realisiert werden können.

Die in einem Gehäuse angeordneten zylinderförmigen Batterien werden mit umgewälzter Luft als Kühlfluid gekühlt. Die Kühlkonzepte sehen hierbei entweder einer reine Längs- bzw. Axialanströmung oder eine reine Quer- oder Radialanströmung der zylinderförmigen Batterien im Gehäuse vor. Die Luft strömt dabei durch Öffnungen oder Bohrungen in das Gehäuse ein und wieder aus. Im Allgemeinen ist an den Wandungen des Gehäuses hierfür nicht nur eine Öffnung zum Einleiten der Kühlluft und eine Öffnung zum Ausleiten der Kühlluft an einer gegenüberliegenden Wandung vorgesehen, sondern viele Öffnungen, d. h. die Wandungen des Gehäuses sind als Lochblech ausgeführt. Es ist auch bekannt, Batteriemodule mit Flüssigkeiten zu kühlen.

Mit einer Längs- bzw. Axialanströmung können zwar die im Gehäuse angeordneten Batterien gleichmäßig temperiert bzw. gekühlt werden, d. h. die Temperaturdifferenz zwischen einzelnen Batterien des Batteriemoduls kann relativ klein gehalten werden. Die erreichbaren Wärmeübergangskoeffizienten sind jedoch gering, weil die

Strömungsgeschwindigkeit aufgrund fehlender Turbulenzen oder Verwirbelungen gering ist, so dass im Allgemeinen eine laminare Strömung vorliegt. Zur Erzielung eines ausreichenden Wärmeübergangskoeffizienten ist bei einer Längs- bzw. Axialanströmung ein großer Volumenstrom erforderlich, der jedoch mit einem hohen Energiebedarf, beispielsweise für Lüftungsventilatoren, verbunden und damit nicht wirtschaftlich ist.

Bei einer Quer- oder Radialanströmung kommt es zwar insbesondere lokal zu Turbulenzen oder Verwirbelungen und damit zu hohen Strömungsgeschwindigkeiten mit einem hohem Wärmeübergangskoeffizienten, jedoch können die Temperaturdifferenzen zwischen den Batterien nicht gering gehalten werden. Insbesondere bei Lithiumionenbatterien ist eine geringe Temperturdifferenz von weniger als 4 K erforderlich. Es kommt zu einer gegenseitigen Abschirmung der Batterien im Strömungsbild, d. h. der Kühlluftstrom kann nicht vollständig genutzt werden sowie zu Ablösezonen auf der in Strömungsrichtung abgewandten Seite der Batterien mit Rezirkulationszonen, in welchen die Luft nur wenig Wärme aufnehmen kann, weil nur ein relativ geringer Austausch zur übrigen durchströmenden Luft stattfindet. Des Weiteren soll bei Lithiumionenbatterien die Temperatur nicht höher als 60° C liegen.

Weiter sind Batteriemodule mit einer Einlassleitung zum Durchleiten eines Kühlfluids aus dem Stand der Technik, z.B. aus EP 1309 019 A2 oder US 7,045,236 B1, bekannt, wobei die Einlassleitung in den Innenraum des Batteriemoduls ragt, so dass das innere Ende der Einlassleitung in einem Abstand zum Gehäuse endet.

Die Aufgabe der vorliegenden Erfindung besteht deshalb darin, ein Batteriemodul und ein Batteriemodulsystem mit mehreren Batteriemodulen zur Verfügung zu stellen, die mit einem geringen Volumenstrom an Kühlfluid wirtschaftlich gekühlt werden können bei einer im Wesentlichen gleichen Temperatur der Batterien in dem Batteriemodul, wobei eine verbesserte Kühlvorrichtung im Vergleich zum Stand der Technik erwünscht ist. Des Weiteren soll der konstruktive Aufwand gering und das Batteriemodul in der Herstellung preiswert sein.

### Offenbarung der Erfindung

Diese Aufgabe wird gelöst mit einem Batteriemodul, umfassend ein Gehäuse zur Aufnahme von wenigstens einer Batterie, wenigstens eine in dem Gehäuse angeordnete Batterie, wenigstens eine Einlassöffnung zum Einleiten eines Kühlfluids, d. h. ein Gas oder eine Flüssigkeit, in das Gehäuse, wenigstens eine Auslassöffnung zum Ausleiten des Kühlfluids aus dem Gehäuse, wobei vorzugsweise an der wenigstens einen Auslassöffnung wenigstens eine Auslassleitung zum Durchleiten des Kühlfluids aus dem Gehäuse ausgebildet ist und die wenigstens eine Auslassleitung in den vom Gehäuse umschlossenen Innenraum des Batteriemoduls ragt, so dass das innere Ende der wenigstens einen Auslassleitung in einem Abstand, z. B. mehr als 1 mm, zum Gehäuse 5 endet, um das Kühlfluid aus dem Innenraum des Batteriemoduls beabstandet vom Gehäuse in die wenigstens eine Auslassleitung einzuleiten zur Erzielung einer turbulenten Strömung und/oder vorzugsweise an der wenigstens einen Einlassöffnung wenigstens eine Einlassleitung zum Durchleiten des Kühlfluids in das Gehäuse ausgebildet ist und die wenigstens eine Einlassleitung in den vom Gehäuse umschlossenen Innenraum des 10 Batteriemoduls ragt, so dass das innere Ende der wenigstens einen Einlassleitung in einem Abstand, z. B. mehr als 1 mm, zum Gehäuse endet, um das Kühlfluid in den Innenraum des Batteriemoduls beabstandet vom Gehäuse einzuleiten zur Erzielung einer turbulenten Strömung, wobei die wenigstens eine Auslassleitung und/oder die wenigstens eine Einlassleitung in einem Zwischenraum zwischen wenigstens zwei Batterien endet, wobei die wenigstens eine Auslassleitung und die wenigstens eine Einlassleitung an gegenüberliegenden Wandungen des Gehäuses ausgebildet sind.

Dadurch bildet sich im Innenraum des Batteriemoduls eine turbulente Strömung bei einem geringen Volumenstrom des Kühlfluids durch die Einlass- und Auslassleitung aus, so dass die wenigstens eine Batterie mit einem hohen Wärmeübergangskoeffizienten gekühlt werden kann. Auch bei der Entnahme einer hohen elektrischen Leistung aus der wenigstens einen Batterie ist eine ausreichende Kühlung der wenigstens eine Batterie gewährleistet, so das die Temperatur der wenigstens einen Batterie z. B. nicht auf Werte oberhalb von 60° C ansteigt. Ferner werden wenigstens zwei Batterien aufgrund der Turbulenzen und dem damit verbundenen Luftaustausch im Innenraum des Batteriemoduls gleichmäßig gekühlt, d. h. die Temperaturdifferenz zwischen wenigstens zwei Batterien ist gering, z. B. weniger als 4 K.

Zweckmäßig weist die wenigstens eine Auslassleitung und die wenigstens eine Einlassleitung im Innenraum des Batteriemoduls eine Länge von wenigstens 10 %, insbesondere wenigstens 30 %, der Länge oder Breite oder Höhe des Gehäuses auf.

In einer weiteren Ausführungsform weist die wenigstens eine Auslassleitung und/oder die wenigstens eine Einlassleitung im Innenraum des Batteriemoduls eine Länge von wenigstens 10 %, insbesondere wenigstens 30 %, der Länge oder Breite oder Höhe oder des Durchmessers der wenigstens einen Batterie auf.

In einer zusätzlichen Ausgestaltung weist die wenigstens eine Auslassleitung und/oder die wenigstens eine EinlassJeitung im Innenraum des Batteriemoduls eine Länge von 1 bis 10 cm, insbesondere von 2 bis 6 cm, auf und/oder endet in einem Abstand von 1 bis 10 cm,insbesondere von 2 bis 6 cm. von wenigstens einer Wandung des Gehäuses.

In einer ergänzenden Ausführungsform weist die wenigstens eine Auslassleitung und/oder die wenigstens eine Einlassleitung einen Durchmesser von 0,2 bis 5 cm. insbesondere von 0,8 bis 2,5 cm, auf.

Insbesondere ist die Längsachse der wenigstens einen Auslassleitung und/oder der wenigstens einen Einlassleitung im Wesentlichen, insbesondere mit einer Abweichung von weniger als 25°, axial bzw. längs oder radial bzw. quer zu wenigstens einer Batterie ausgerichtet.

Vorzugsweise ist an der der wenigstens einen Einlassleitung gegenüberliegenden Wandung des Gehäuses im Innenraum des Batteriemoduls eine Luftleiteinrichtung, insbesondere ein Luftleitblech, angeordnet. Die Luftleiteinrichtung fördert eine walzenartige Strömung, so dass sich das Kühlfluid gut durchmischt und die wenigstens eine Batterie mit einem höheren Anteil auch senkrecht zur Achse der Ein- und/oder Auslassleitung angeströmt wird.

In einer zusätzlichen Ausgestaltung beträgt die Höhe und/oder die Breite und/oder die Länge und/oder der Durchmesser der Luftleiteinrichtung 0,1 bis 1,5, insbesondere 0,2 bis 0,8, der Länge der wenigstens einen Einlassleitung und/oder der wenigstens einen Auslassleitung.

Insbesondere beträgt die Höhe und/oder die Breite und/oder die Länge und/oder der Durchmesser der Luftleiteinrichtung 0,5 bis 5 cm.

In einer weiteren Ausführungsform umfasst das Batteriemodul wenigstens 5 Batterien, insbesondere 6 oder 8 Batterien.

Insbesondere ist die wenigstens eine Batterie wenigstens eine Lithiumionenbatterie.

In einer weiteren Ausgestaltung ist das Kühlfluid Luft.

Zweckmäßig besteht das Gehäuse aus Metall oder Kunststoff.

In einer weiteren Ausgestaltung ist die wenigstens eine Auslassleitung und/oder die wenigstens eine Einlassleitung, insbesondere der Querschnitt der wenigstens einen Auslassleitung und/oder der wenigstens einen Einlassleitung, dahingehend ausgebildet, dass der zur Aufnahme der wenigstens einen Auslassleitung und/oder der wenigstens eine Einlassleitung zur Verfügung stehenden Bereich des Innenraumes des Batteriemoduls optimal ausgenutzt ist für eine Maximierung des Strömungsquerschnitts der wenigstens einen Auslassleitung und/oder der wenigstens einen Einlassleitung.

In einer ergänzenden Variante ist die wenigstens eine Auslassleitung und/oder die wenigstens eine Einlassleitung im Querschnitt vieleckig, z. B. rechteckig, insbesondere quadratisch, oder dreieckig, wobei die Seiten eines Vieleckes, z. B. Drei- oder Fünfeck, komplementär zu den angrenzenden Batterien und/oder dem angrenzenden Gehäuse, insbesondere wenigstens einer Seitenwandung, ausgebildet sind.

Zweckmäßig weist eine Bodenwandung und/oder eine äußere Bodenwandung eine Einlassöffnung und/oder Auslassöffnung auf, insbesondere weist die Bodenwandung und/oder die äußere Bodenwandung zu der Einlassöffnung und/oder der Auslassöffnung hin ein Gefälle auf, so dass Staub, Wasser oder andere Stoffe bzw. Substanzen aus der Einlassöffnung und/oder der Auslassöffnung aus dem Batteriemodul ausleitbar sind.

In einer zusätzlichen Ausgestaltung weist das Batteriemodul, insbesondere die Oberfläche des den Innenraum des Batteriemoduls einschließenden Bereiches des Gehäuses, eine Antihaftbeschichtung und/oder ein antistatisches Material und/oder einen Lotus-Effekt auf.

In einer ergänzenden Ausführungsform weist die wenigstens eine Einlassleitung und/oder die wenigstens eine Auslassleitung an den Abschnitten der Einlass- und/oder Auslassöffnung zur Durchführung der wenigstens einen Einlassleitung und/oder der wenigstens einen Auslassleitung eine anderen, kreisförmigen Querschnitt als an den übrigen Bereichen der wenigstens einen Einlassleitung und/oder Auslassleitung auf. Der optimierte Querschnitt, z. B. ein Quadrat, für einen großen Strömungsquerschnitt kann an den Ein- und/oder Auslassöffnungen an der Deck- und Bodenwandung sowie der äußeren Deck- und Bodenwandung nur schwierig abgedichtet werden. Ein nur in diesem Abdichtungsbereich kreisförmiger Querschnitt behebt dieses Problem.

In einer weiteren Ausgestaltung nimmt der Strömungsquerschnitt in Richtung einer Längsachse der wenigstens einen Ein- und/oder Auslassleitung zu einem Ende der Ein- und/oder Auslassleitung, wobei das Ende in dem Innenraum angeordnet ist, zu, um den Druckabfall zu verringern. Der zunehmende Strömungsquerschnitt wird beispielsweise mit einem größeren äußeren Querschnitt und/oder mit einem größeren inneren Querschnitt der wenigstens einen Ein- und/oder Auslassleitung realisiert.

In einer Variante ist die Anzahl von wenigstens zwei Auslassleitungen größer als die Anzahl von wenigstens einer Einlassleitung. Beispielsweise umfasst das Batteriemodul zwei Auslassleitungen und eine Einlassleitung. Bei einem Batteriemodul mit acht Batterien kann die Einlassleitung mittig zwischen den beiden inneren Batteriepaaren und die beiden Auslassleitungen jeweils zwischen dem äußersten Batteriepaar und dem sich an das äußerste Batteriepaar anschließende Batteriepaar angeordnet werden. Die acht Batterien sind in vier Batteriepaaren in einer Reihe analog zu dem Ausführungsbeispiel mit drei Batteriepaaren angeordnet. Dadurch kann die gleichmäßige Kühlung der Batterien noch weiter verbessert werden.

Ein erfindungsgemäßes Batteriemodulsystem mit mehreren Batteriemodulen umfasst wenigstens ein oben beschriebenes Batteriemodul.

Im Nachfolgenden werden drei Ausführungsbeispiele der Erfindung unter Bezugnahme auf die beigefügten Zeichnungen näher beschrieben. Es zeigt:
- Fig. 1: einen schematischen Querschnitt eines Batteriemoduls in einer ersten Ausführungsform gemäß Schnitt A-A in Fig. 2,
- Fig. 2: einen schematischen Längsschnitt des Batteriemoduls gemäß Schnitt B-B in Fig. 1,
- Fig. 3: eine perspektivische Ansicht der Batterien ohne Gehäuse,
- Fig. 4: eine perspektivische Ansicht eines zweiteiligen Gehäuses ohne äußere Deck- und Bodenwandung,
- Fig. 5: eine perspektivische Ansicht einer äußeren Deck- und Bodenwandung,
- Fig. 6: eine perspektivische Ansicht eines oberen Gehäuseteils in der ersten Ausführungsform,
- Fig. 7: eine perspektivische Ansicht eines unteren Gehäuseteils in der ersten Ausführungsform,
- Fig. 8: eine perspektivische Ansicht des oberen Gehäuseteils in der zweiten Ausführungsform,
- Fig. 9: eine perspektivische Ansicht des unteren Gehäuseteils in der zweiten Ausführungsform,
- Fig. 10: eine perspektivische Ansicht des unteren Gehäuseteils in der dritten Ausführungsform und
- Fig. 11: einen stark schematisierten Längsschnitt eines Batteriemodulsystems.

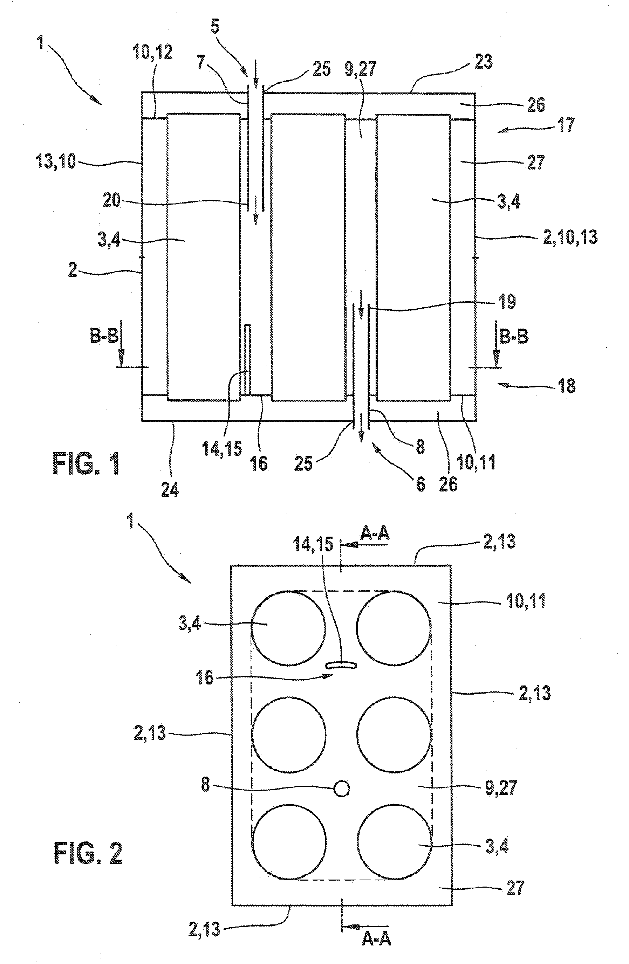

In Figur 1 ist ein erfindungsgemäßes Batteriemodul 1 in einer ersten Ausführungsform zur Aufnahme von sechs als Lithiumionenbatterien 4 ausgebildeten Batterien 3 in einem schematisierten Querschnitt dargestellt. Das aus Wandungen 10 gebildete Gehäuse 2 verfügt über vier Seitenwandungen 13, eine Bodenwandung 11 und eine Deckwandung 12 (Fig. 1 und 2). Die Länge des Batteriemoduls beträgt 12 cm, die Breite 7 cm und die Höhe 10 cm. Durch eine Einlassöffnung 5 einer Einlassleitung 7 an der Deckwandung 12 wird Luft als Kühlfluid in den Innenraum 27 des Gehäuses 2 geleitet. Das Ende 20 der Einlassleitung 7 endet in einem Zwischenraum 9 zwischen den Lithiumionenbatterien 4 mit einem Abstand von 4 cm von der Deckwandung 12. Der Zwischenraum 9 ist in Fig. 2 strichliert eingerahmt. Analog ist die Auslassleitung 8 mit der Auslassöffnung 6 an der Bodenwandung 11 ausgebildet und endet ebenfalls in einem Abstand von 4 cm von der Bodenwandung 11 im Zwischenraum 9. Die Einlass- und Auslassleitung 7, 8 mit einem Durchmesser von 1,5 cm sind versetzt zueinander in einem horizontalen Abstand von ungefähr 3 cm angeordnet. Die Bodenwandung 11 ist mit einer als Luftleitblech 15 ausgebildeten Luftleiteinrichtung 14 versehen. Das Gehäuse 2 besteht aus Metall oder Kunststoff. Die Einlass- und Auslassleitung 7, 8 sowie die Luftleiteinrichtung 14 kann auch elastisch, z. B. als biegsamer Schlauch, ausgeführt sein. Die Einlass- und Auslassleitung 6, 7 ist im Wesentlichen in axialer Richtung oder in Längsrichtung zu den Lithiumionenbatterien 4 ausgerichtet. Abweichend hiervon kann die Einlass- und Auslassleitung 6, 7 in radialer Richtung oder in Querrichtung zu den Lithiumionenbatterien 4 ausgerichtet sein (nicht dargestellt). Vorzugsweise sind die Einlass- und Auslassleitung 6, 7 an zwei gegenüberliegenden Wandungen 10 des Gehäuses 2 angeordnet. Abweichend hiervon können die Einlass- und Auslassleitung 6, 7 auch an der gleichen Wandung, z. B. der Deckwandung 12, ausgebildet sein (nicht dargestellt).

Die Luft wird mittels eines Gebläses oder eines Ventilators (nicht dargestellt) in die Einlassöffnung 5 der Einlassleitung 7 eingeleitet und strömt am Ende 20 der Einlassleitung 7 in den Zwischenraum 9. Die in das Gehäuse 2 eingeleitete Luft strömt am Ende 20 der Auslassleitung 8 wieder aus dem Gehäuse heraus. Ein Teil der durch die Einlassleitung 7 eingeleiteten Luft trifft auf der Bodenwandung 11 am Auftreffort 16 auf (Fig. 1 und 2). Um eine zu starke Kühlung der beiden in Fig. 2 oberhalb des Auftreffortes 16 angeordneten Lithiumionenbatterien 4 zu vermeiden, schirmt das Luftleitblech 15 diese beiden Lithiumionenbatterien 4 von der einströmenden Luft ab, so dass unter anderem dadurch eine gleichmäßig Kühlung mit einer Temperaturdifferenz von weniger als 4 K zwischen sämtlichen Lithiumionenbatterien 4 in dem Batteriemodul 1 erreicht werden kann. Die Anordnung der Einlass- und Auslassleitung 7, 8 bewirkt, dass sich im Innenraum 27 des Gehäuses 2 eine überwiegend turbulente Strömung mit lokalen laminaren Anteilen ausbildet. Ferner begünstigt oder fördert das Luftleitblech 15 eine wenigstens teilweise walzenartige Strömung, welche die Luft gut durchmischt und dafür sorgt, dass die Lithiumionenbatterien 4 auch radial angeströmt werden. Es liegt eine Strömung mit radialen und axialen Anteilen vor, so dass sich die radialen und axialen Anteile vorteilhaft ergänzen. Des Weiteren ist die Strömungsverteilung wegen des "chaotischen" Strömungsbildes überwiegend instationär. Damit kann auch bei einem geringen in das Batteriemodul ein- und ausgeleiteten Volumenstrom an Luft ein hoher, im Wesentlichen gleichmäßiger Wärmeübergangskoeffizient für sämtliche Lithiumionenbatterien 4 erreicht werden. Die Lithiumionenbatterien 4 können damit mit einem geringen Volumenstrom auch bei der Entnahme hoher elektrischer Leistungen aus den Lithiumionenbatterien 4 auf Temperaturen unterhalb von 60° C gekühlt werden bei einer Temperaturdifferenz von weniger als 4 K zwischen den Lithiumionenbatterien 4. Der Volumenstrom wird somit durch das erzeugte Strömungsbild wesentlich effektiver und optimaler genutzt.

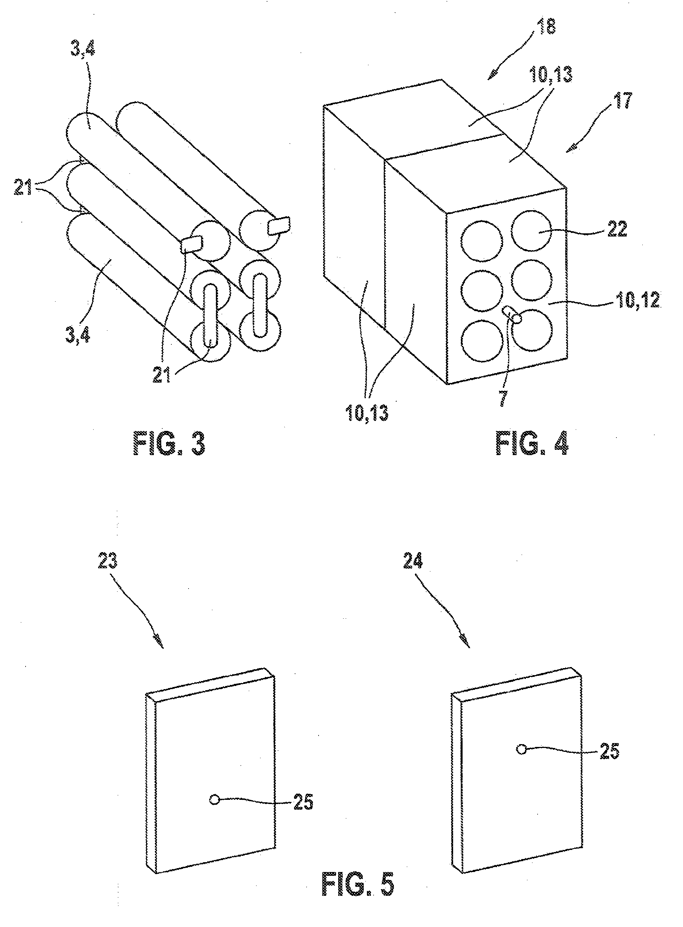

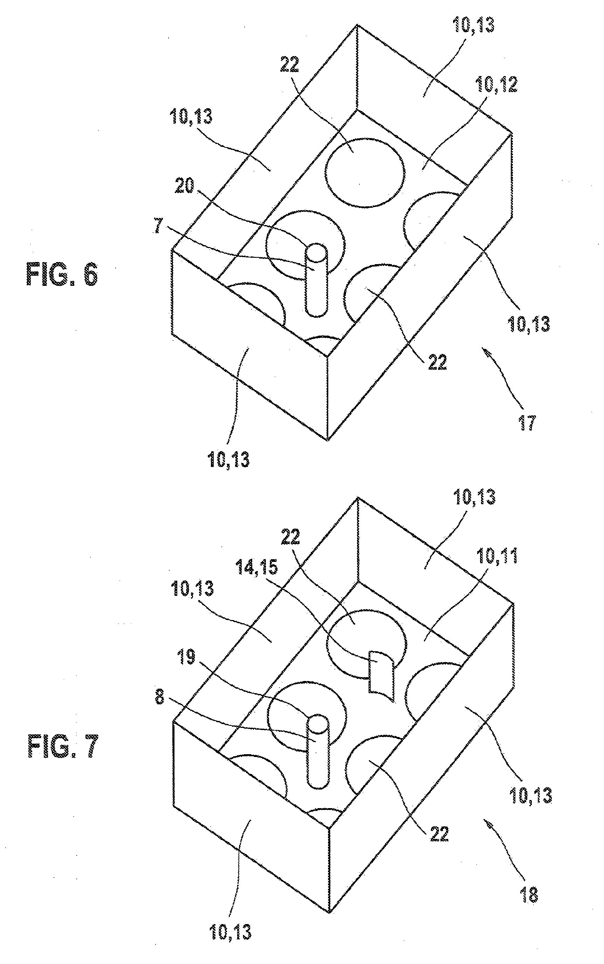

Die Fig. 3 bis 7 zeigen den konstruktiven Aufbau des Batteriemoduls 1 in der ersten Ausführungsform. Das Gehäuse 2 umfasst ein oberes Gehäuseteil 17 (Fig. 6), ein unteres Gehäuseteil 18 (Fig. 7), eine äußere Deckwandung 23 und eine äußere Bodenwandung 24 (Fig. 5). Die sechs Lithiumionenbatterien 4 sind mittels elektrischer Verbindungen 21 miteinander verbunden (Fig. 3). Das obere und untere Gehäuseteil 17, 18 wird an den in den Fig. 6 und 7 nach oben aufstehenden Seitenwandungen 13 aufeinander gestellt und miteinander, beispielsweise durch eine Schraubverbindung (nicht dargestellt), verbunden (Fig. 4). Vor dem Zusammenfügen des oberen und unteren Gehäuseteils 17, 18 werden die sechs Batterien (Fig. 3) in das obere oder untere Gehäuseteil 17, 18 eingebracht. Die Deck- und Bodenwandung 11, 12 des oberen und unteren Gehäuseteils 17, 18 ist je mit sechs kreisförmigen Ausnehmungen 22 versehen (Fig. 4, 6, 7), in welche die oberen und unteren Enden der Lithiumionenbatterien 4 einragen. An den kreisförmigen Ausnehmungen 22 ist ein Dichtungsring (nicht dargestellt) angeordnet.

Auf die Deckwandung 12 des oberen Gehäuseteils 17 wird die äußere Deckwandung 23 (Fig. 5) und auf die Bodenwandung 11 des unteren Gehäuseteils 18 wird die untere Deckwandung 24 (Fig. 5) aufgesetzt. Dadurch bildet sich zwischen der Deckwandung 12 des oberen Gehäuseteils 17 und zwischen der Bodenwandung 11 des unteren Gehäuseteils 18 und der unteren Deckwandung 24 ein Entgasungskanal 26 für die Lithiumionenbatterien 4 aus, so dass von den Lithiumionenbatterien 4 austretendes Gas nicht in die Luft zum Kühlen eintreten kann (Fig. 1 und 4). Hierzu ist die Einlassleitung 7 an der oberen Deckwandung 12 geringfügig über die obere Deckwandung 12 hinaus verlängert (Fig. 4) und stößt in die Bohrung 25 der äußeren Deckwandung 23. Durch die Bohrung 25 wird die Luft in die Einlassleitung 7 eingeführt. Analog ist dies auch bei der äußeren Bodenwandung 24 und der Bodenwandung 11 mit der Auslassleitung 8 ausgeführt (Fig. 1).

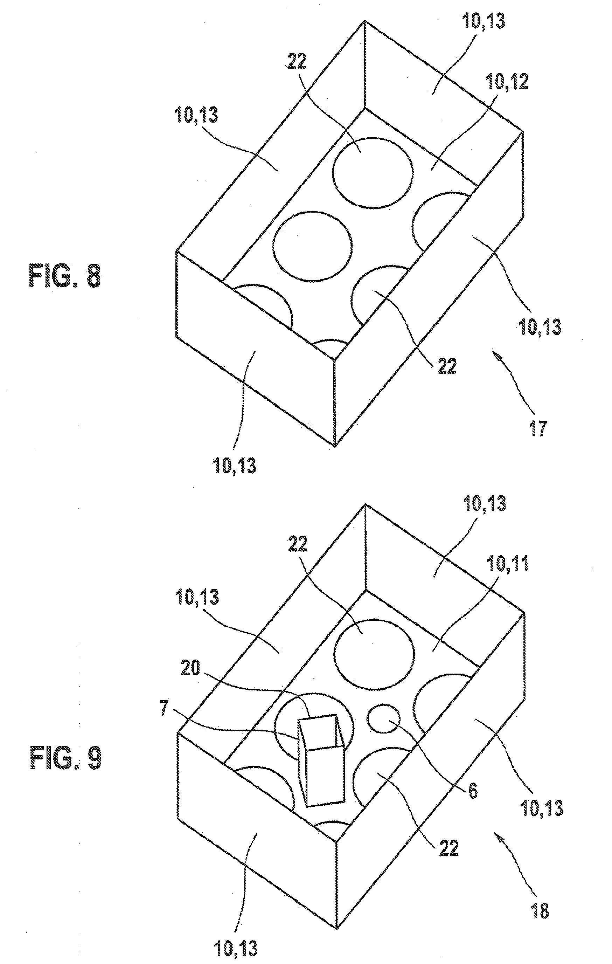

In Fig. 8 und 9 ist die zweite Ausführungsform des Batteriemoduls 1 dargestellt. Hinsichtlich der zweiten Ausführungsform werden nur die Unterschiede zu der ersten Ausführungsform beschrieben. Das obere Gehäuseteil 17 weist keine Einlassleitung 7 auf. In dem unteren Gehäuseteil 18 ist keine Auslassleitung 8 angeordnet. Anstelle der Auslassleitung 8 ist in der Bodenwandung 11 am unteren Gehäuseteil 18 eine Auslassöffnung 6 ausgebildet. Durch die Auslassöffnung 6 kann mittels einer zwischen Bodenwandung 11 und der äußeren Bodenwandung 24 angeordneten Auslassleitung 8 Luft als Kühlfluid aus dem Innenraum 27 des Batteriemoduls 1 ausgeleitet werden (nicht dargestellt). Außerdem ist die Bodenwandung 11 zu der Auslassöffnung 6 geneigt, so dass Staub, Wasser, oder andere Stoffe aus dem Innenraum 27 abgeleitet werden können. In der ersten Ausführungsform ist an dem unteren Gehäuseteil 18 eine Auslassleitung 8 vorhanden. Anstelle der Auslassleitung 8 ist in der zweiten Ausführungsform in dem unteren Gehäuseteil 18 eine Einlassleitung 7 ausgebildet. Die Einlassleitung 7 weist einen quadratischen Querschnitt auf, so dass der zwischen den Batterien 3 vorhandene Innenraum 27 besser genutzt werden kann als bei einem kreisförmigen Querschnitt. Die Querschnittsfläche der Einlassleitung 7 in der zweiten Ausführungsform kann somit größer ausgebildet werden als bei der Einlassleitung 7 in der ersten Ausführungsform, so dass die Luft mit einer geringeren Geschwindigkeit dem Batteriemodul 1 zugeführt werden kann, wodurch der Druckabfall gegenüber einer Einlassleitung 7 mit einem kleineren Querschnitt bzw. Strömungsquerschnitt verringert wird.

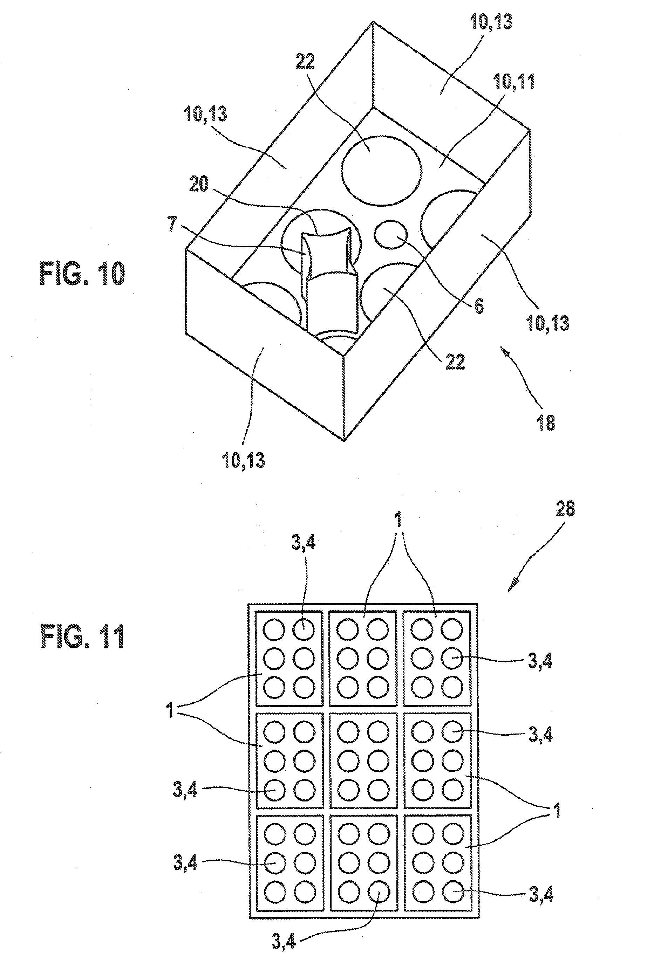

In Fig. 10 ist die dritte Ausführungsform des Batteriemoduls 1 dargestellt. Hinsichtlich der dritten Ausführungsform werden nur die Unterschiede zu der zweiten Ausführungsform beschrieben. Die Einlassleitung 7 besteht aus vier Teilwandungen, die komplementär zu den Batterien 3 ausgebildet sind. Die Teilwandungen sind gekrümmt, so dass der zwischen den Batterien 3 vorhandene Innenraum 27 noch besser genutzt werden kann als bei einem quadratischen Querschnitt.

Die Einzelheiten der verschiedenen Ausführungsbeispiele sind miteinander kombinierbar, sofern nichts Gegenteiliges erwähnt wird.

Mehrere Batteriemodule 1 können auch zu einem erfindungsgemäßen Batteriemodulsystem verbunden werden (Fig. 8). Die Einlass- und Auslassöffnungen 5, 6 der einzelnen Batteriemodule 1 werden zu einer zentralen Luftzufuhr, z. B. einem Ventilator, parallel geschaltet (nicht dargestellt). In einem Batteriemodulsystem, beispielsweise für ein Personenfahrzeug- oder Nutzfahrzeug, mit 12 Batteriemodulen 1 (nicht dargestellt) mit je 6 Lithiumionenbatterien 4 befinden sich somit 72 Lithiumionenbatterien 4. Der modulare Aufbau gestattet damit eine bessere Skalierbarkeit, weil mit den identischen Batteriemodulen 1 unterschiedliche elektrische Leistungen für verschiedene Anwendungen einfach realisiert werden können.

Insgesamt betrachtet wird mit dem erfindungsgemäßen Batteriemodul 1 die Strömung des Kühlfluids, d. h. Gas oder Flüssigkeit, wesentlich verbessert, weil mit einem geringen Volumenstrom an Kühlfluid ein hoher Wärmeübergangskoeffizient erreicht werden kann. Dabei werden geringe Temperaturdifferenzen zwischen den einzelnen Batterien 3 erzielt, so dass auch die insbesondere für Lithiumionenbatterien 4 erforderliche homogene Temperatur sämtlicher Lithiumionenbatterien 4 in einem Batteriemodul 1 oder einem Batteriemodulsystem erreicht werden kann.

## Patentansprüche

1. Batteriemodul (1), umfassend ein Gehäuse (2), wenigstens eine in dem Gehäuse (2) angeordnete Batterie (3), wenigstens eine Einlassöffnung (5) zum Einleiten eines Kühlfluids in das Gehäuse (2), wenigstens eine Auslassöffnung (6) zum Ausleiten des Kühlfluids aus dem Gehäuse (2), wobei
wenigstens eine Auslassleitung (8) zum Durchleiten des Kühlfluids aus dem Gehäuse (2) ausgebildet ist und die wenigstens eine Auslassleitung (8) in den Innenraum (27) des Batteriemoduls (1) ragt, so dass das innere Ende (19) der wenigstens einen Auslassleitung (8) in einem Abstand zum Gehäuse (2) endet, um das Kühlfluid aus dem Innenraum (27) des Batteriemoduls (1) beabstandet vom Gehäuse (2) in die wenigstens eine Auslassleitung (8) einzuleiten
und
wenigstens eine Einlassleitung (7) zum Durchleiten des Kühlfluids in das Gehäuse (2) ausgebildet ist und die wenigstens eine Einlassleitung (7) in den Innenraum (27) des Batteriemoduls (1) ragt, so dass das innere Ende (20) der wenigstens einen Einlassleitung (7) in einem Abstand zum Gehäuse (2) endet. um das Kühlfluid in den Innenraum (27) des Batteriemoduls (1) beabstandet vom Gehäuse (2) einzuleiten, wobei die wenigstens eine Auslassleitung (8) und/oder die wenigstens eine Einfassleitung (7) in einem Zwischenraum (9) zwischen wenigstens zwei Batterien (3) endet
**dadurch gekennzeichnet, dass**
die wenigstens eine Auslassleitung (8) und die wenigstens eine Einlassleitung (7) an gegenüberliegenden Wandungen (10) des Gehäuses (2) ausgebildet sind.

2. Batteriemodul nach Anspruch 1,
**dadurch gekennzeichnet, dass**
die wenigstens eine Auslassleitung (8) und/oder die wenigstens eine Einlassleitung (7) im Innenraum (27) des Batteriemoduls (1) eine Länge von wenigstens 10 %, insbesondere wenigstens 30 %, der Länge oder Breite oder Höhe des Gehäuses (2) aufweist.

3. Batteriemodul nach einem oder mehreren der vorhergehenden Ansprüche,
**dadurch gekennzeichnet, dass**
die wenigstens eine Auslassleitung (8) und/oder die wenigstens eine Einlassleitung (7) im Innenraum (27) des Batteriemoduls (1) eine Länge von wenigstens 10 %, insbesondere wenigstens 30 %, der Länge oder Breite oder Höhe oder des Durchmessers der wenigstens einen Batterie (3) aufweist.

4. Batteriemodul nach einem oder mehreren der vorhergehenden Ansprüche,
**dadurch gekennzeichnet, dass**
die wenigstens eine Auslassleitung (8) und/oder die wenigstens eine Einlassleitung (7) im Innenraum (27) des Batteriemoduls (1) eine Länge von 1 bis 10 cm, insbesondere von 2 bis 6 cm, aufweist und/oder in einem Abstand von 1 bis 10 cm, insbesondere von 2 bis 6 cm, von wenigstens einer Wandung (10) des Gehäuses (2) endet.

5. Batteriemodul nach einem oder mehreren der vorhergehenden Ansprüche,
**dadurch gekennzeichnet, dass**
die wenigstens eine Auslassleitung (8) und/oder die wenigstens eine Einlassleitung (7) einen Durchmesser von 0,2 bis 5 cm, insbesondere von 0,8 bis 2,5 cm, aufweist.

6. Batteriemodul nach einem oder mehreren der vorhergehenden Ansprüche,
**dadurch gekennzeichnet, dass**
die Längsachse der wenigstens einen Auslassleitung (8) und/oder der wenigstens einen Einlassleitung (7) im Wesentlichen, insbesondere mit einer Abweichung von weniger als 25°, axial bzw. längs oder radial bzw. quer zu wenigstens einer Batterie (3) ausgerichtet ist.

7. Batteriemodul nach einem oder mehreren der vorhergehenden Ansprüche,
**dadurch gekennzeichnet, dass**
an der der wenigstens einen Einlassleitung (7) gegenüberliegenden Wandung (10) des Gehäuses (2) im Innenraum (27) des Batteriemoduls (1) eine Luftleiteinrichtung (14), insbesondere ein Luftleitblech (15), angeordnet ist.

8. Batteriemodul nach Anspruch 9,
**dadurch gekennzeichnet, dass**
die Höhe und/oder die Breite und/oder die Länge und/oder der Durchmesser der Luftleiteinrichtung (14) 0,1 bis 1,5, insbesondere 0,2 bis 0,8, der Länge der wenigstens einen Einlassleitung (7) und/oder der wenigstens einen Auslassleitung (8) beträgt.

9. Batteriemodul nach Anspruch 9 oder 10,
**dadurch gekennzeichnet, dass**
die Höhe und/oder die Breite und/oder die Länge und/oder der Durchmesser der Luftleiteinrichtung (14) 0,5 bis 5 cm beträgt.

10. Batteriemodul nach einem oder mehreren der vorhergehenden Ansprüche,
**dadurch gekennzeichnet, dass**
das Batteriemodul (1) wenigstens 5 Batterien (3), insbesondere 6 oder 8 Batterien (3), umfasst.

11. Batteriemodul nach einem oder mehreren der vorhergehenden Ansprüche,
**dadurch gekennzeichnet, dass**
die wenigstens eine Batterie (3) wenigstens eine Lithiumionenbatterie (4) ist und/oder das Kühlfluid Luft ist.

12. Batteriemodul nach einem oder mehreren der vorhergehenden Ansprüche,
**dadurch gekennzeichnet, dass**
die wenigstens eine Auslassleitung (8) und/oder die wenigstens eine Einlassleitung (7), insbesondere der Querschnitt der wenigstens einen Auslassleitung (8) und/oder der wenigstens einen Einlassleitung (7), dahingehend ausgebildet ist, dass der zur Aufnahme der wenigstens einen Auslassleitung (8) und/oder der wenigstens eine Einlassleitung zur Verfügung stehenden Bereich des Innenraumes (27) des Batteriemoduls (1) optimal ausgenutzt ist für eine Maximierung des Strömungsquerschnitts der wenigstens einen Auslassleitung (8) und/oder der wenigstens einen Einlassleitung (7).

13. Batteriemodul nach Anspruch 12,
**dadurch gekennzeichnet, dass**
die wenigstens eine Auslassleitung (8) und/oder die wenigstens eine Einlassleitung (7) im Querschnitt vieleckig, z. B. rechteckig, insbesondere quadratisch, oder dreieckig, wobei die Seiten des Vieleckes, z. B. Drei- oder Fünfeck, komplementär zu den angrenzenden Batterien (3) und/oder dem angrenzenden Gehäuse (2), insbesondere wenigstens einer Seitenwandung (13), ausgebildet ist.

14. Batteriemodul nach einem oder mehreren der vorhergehenden Ansprüche,
**dadurch gekennzeichnet, dass**
eine Bodenwandung (11) und/oder eine äußere Bodenwandung (24) eine Einlassöffnung (5) und/oder Auslassöffnung (6) aufweisen, insbesondere die Bodenwandung (11) und/oder die äußere Bodenwandung (24) zu der Einlassöffnung (5) und/oder der Auslassöffnung (6) hin ein Gefälle aufweisen, so dass Staub, Wasser oder andere Stoffe bzw. Substanzen aus der Einlassöffnung (5) und/oder der Auslassöffnung (6) aus der Batteriemodul (1) ausleitbar sind.

15. Batteriemodul nach einem oder mehreren der vorhergehenden Ansprüche,
**dadurch gekennzeichnet, dass**
das Batteriemodul (1), insbesondere die Oberfläche des den Innenraum (27) des Batteriemoduls (1) einschließenden Bereiches des Gehäuses (2), eine Antihaftbeschichtung und/oder aus ein antistatisches Material aufweist und/oder einen Lotus-Effekt aufweist.

16. Batteriemodul nach einem oder mehreren der vorhergehenden Ansprüche,
**dadurch gekennzeichnet, dass**
die Anzahl von wenigstens zwei Auslassleitungen (8) größer ist als die Anzahl von wenigstens einer Einlaßleitung (7).

17. Batteriemodulsystem (28) mit mehreren Batteriemodulen (1),
**dadurch gekennzeichnet, dass**
das Batteriemodulsystem (28) wenigstens ein Batteriemodul (1) nach einem oder mehreren der vorhergehenden Ansprüche umfasst.

## Claims

1. Battery module (1) comprising a housing (2), at least one battery (3) arranged in the housing (2), at least one inlet opening (5) for introducing a cooling fluid into the housing (2), and at least one outlet opening (6) for discharging the cooling fluid from the housing (2), wherein at least one outlet line (8) for passing the cooling fluid out of the housing (2) is formed, and the at least one outlet line (8) protrudes into the interior (27) of the battery module (1) such that the inner end (19) of the at least one outlet line (8) ends at a distance from the housing (2) in order to introduce the cooling fluid from the interior (27) of the battery module (1) into the at least one outlet line (8) at a distance from the housing (2),
and
at least one inlet line (7) for passing the cooling fluid into the housing (2) is formed, and the at least one inlet line (7) protrudes into the interior (27) of the battery module (1) such that the inner end (20) of the at least one inlet line (7) ends at a distance from the housing (2) in order to introduce the cooling fluid into the interior (27) of the battery module (1) at a distance from the housing (2), wherein the at least one outlet line (8) and/or the at least one inlet line (7) end/ends in an intermediate space (9) between at least two batteries (3), **characterized in that** the at least one outlet line (8) and the at least one inlet line (7) are formed on opposite walls (10) of the housing (2).

2. Battery module according to Claim 1, **characterized in that** the at least one outlet line (8) and/or the at least one inlet line (7) in the interior (27) of the battery module (1) have/has a length of at least 10%, in particular at least 30%, of the length or width or height of the housing (2).

3. Battery module according to one or more of the preceding claims, **characterized in that** the at least one outlet line (8) and/or the at least one inlet line (7) in the interior (27) of the battery module (1) have/has a length of at least 10%, in particular at least 30%, of the length or width or height or of the diameter of the at least one battery (3).

4. Battery module according to one or more of the preceding claims, **characterized in that** the at least one outlet line (8) and/or the at least one inlet line (7) in the interior (27) of the battery module (1) have/has a length of 1 to 10 cm, in particular of 2 to 6 cm, and/or end/ends at a distance of 1 to 10 cm, in particular of 2 to 6 cm, from at least one wall (10) of the housing (2).

5. Battery module according to one or more of the preceding claims, **characterized in that** the at least one outlet line (8) and/or the at least one inlet line (7) have/has a diameter of 0.2 to 5 cm, in particular of 0.8 to 2.5 cm.

6. Battery module according to one or more of the preceding claims, **characterized in that** the longitudinal axis of the at least one outlet line (8) and/or of the at least one inlet line (7) is substantially oriented, in particular with a deviation of less than 25°, axially or longitudinally or radially or transversely with respect to at least one battery (3).

7. Battery module according to one or more of the preceding claims, **characterized in that** an air-guiding device (14), in particular an air deflector (15), is arranged on that wall (10) of the housing (2) in the interior (27) of the battery module (1) that is opposite the at least one inlet line (7).

8. Battery module according to Claim 7, **characterized in that** the height and/or the width and/or the length and/or the diameter of the air-guiding device (14) are/is 0.1 to 1.5, in particular 0.2 to 0.8, of the length of the at least one inlet line (7) and/or of the at least one outlet line (8).

9. Battery module according to Claim 7 or 8, **characterized in that** the height and/or the width and/or the length and/or the diameter of the air-guiding device (14) are/is 0.5 to 5 cm.

10. Battery module according to one or more of the preceding claims, **characterized in that** the battery module (1) comprises at least 5 batteries (3), in particular 6 or 8 batteries (3).

11. Battery module according to one or more of the preceding claims, **characterized in that** the at least one battery (3) is at least one lithium ion battery (4) and/or the cooling fluid is air.

12. Battery module according to one or more of the preceding claims, **characterized in that** the at least one outlet line (8) and/or the at least one inlet line (7), in particular the cross section of the at least one outlet line (8) and/or of the at least one inlet line (7), are/is formed to the effect that that region of the interior (27) of the battery module (1) that is available for receiving the at least one outlet line (8) and/or the at least one inlet line is optimally used for maximizing the flow cross section of the at least one outlet line (8) and/or of the at least one inlet line (7).

13. Battery module according to Claim 12, **characterized in that** the at least one outlet line (8) and/or the at least one inlet line (7) are/is of polygonal design, for example rectangular, in particular square, or triangular, in cross section, wherein the sides of the polygon, for example triangle or pentagon, are formed in a complementary manner with respect to the adjacent batteries (3) and/or the adjacent housing (2), in particular to at least one side wall (13).

14. Battery module according to one or more of the preceding claims, **characterized in that** a bottom wall (11) and/or an outer bottom wall (24) have/has an inlet opening (5) and/or outlet opening (6), in particular the bottom wall (11) and/or the outer bottom wall (24) have/has a slope with respect to the inlet opening (5) and/or the outlet opening (6) such that dust, water or other materials or substances are dischargeable from the inlet opening (5) and/or the outlet opening (6) from the battery module (1).

15. Battery module according to one or more of the preceding claims, **characterized in that** the battery module (1), in particular the surface of that region of the housing (2) which encloses the interior (27) of the battery module (1), has an antistick coating and/or is made from an antistatic material and/or has a lotus effect.

16. Battery module according to one or more of the preceding claims, **characterized in that** the number of outlet lines (8), of which there are at least two, is greater than the number of inlet lines (7), of which there is at least one.

17. Battery module system (28) with a plurality of battery modules (1), **characterized in that** the battery module system (28) comprises at least one battery module (1) according to one or more of the preceding claims.

## Revendications

1. Module de batterie (1), comprenant un boîtier (2), au moins une batterie (3) disposée dans le boîtier (2), au moins une ouverture d'entrée (5) pour l'introduction d'un fluide de refroidissement dans le boîtier (2), au moins une ouverture de sortie (6) pour l'évacuation du fluide de refroidissement hors du boîtier (2),
au moins une conduite de sortie (8) étant réalisée pour conduire le fluide de refroidissement hors du boîtier (2) et l'au moins une conduite de sortie (8) entrant dans l'espace interne (27) du module de batterie (1) de telle sorte que l'extrémité interne (19) de l'au moins une conduite de sortie (8) se termine à une certaine distance du boîtier (2), afin d'introduire le fluide de refroidissement hors de l'espace interne (27) du module de batterie (1) à distance du boîtier (2) dans l'au moins une conduite de sortie (8)
et
au moins une conduite d'entrée (7) étant réalisée pour conduire le fluide de refroidissement dans le boîtier (2) et l'au moins une conduite d'entrée (7) entrant dans l'espace interne (27) du module de batterie (1) de telle sorte que l'extrémité interne (20) de l'au moins une conduite d'entrée (7) se termine à une certaine distance du boîtier (2), afin d'introduire le fluide de refroidissement dans l'espace interne (27) du module de batterie (1) à distance du boîtier (2), l'au moins une conduite de sortie (8) et/ou l'au moins une conduite d'entrée (7) se terminant dans un espace intermédiaire (9) entre au moins deux batteries (3),
**caractérisé en ce que**
l'au moins une conduite de sortie (8) et l'au moins une conduite d'entrée (7) sont réalisées sur des parois opposées (10) du boîtier (2).

2. Module de batterie selon la revendication 1,
**caractérisé en ce que**
l'au moins une conduite de sortie (8) et/ou l'au moins une conduite d'entrée (7) dans l'espace interne (27) du module de batterie (1) présentent une longueur d'au moins 10 %, notamment d'au moins 30 %, de la longueur ou de la largeur ou de la hauteur du boîtier (2).

3. Module de batterie selon l'une quelconque ou plusieurs des revendications précédentes,
**caractérisé en ce que**
l'au moins une conduite de sortie (8) et/ou l'au moins une conduite d'entrée (7) dans l'espace interne (27) du module de batterie (1) présentent une longueur d'au moins 10 %, notamment d'au moins 30 % de la longueur ou de la largeur ou de la hauteur ou du diamètre de l'au moins une batterie (3).

4. Module de batterie selon l'une quelconque ou plusieurs des revendications précédentes,
**caractérisé en ce que**
l'au moins une conduite de sortie (8) et/ou l'au moins une conduite d'entrée (7) dans l'espace interne (27) du module de batterie (1) présente une longueur de 1 à 10 cm, notamment de 2 à 6 cm, et/ou se termine à une distance de 1 à 10 cm, notamment de 2 à 6 cm, d'au moins une paroi (10) du boîtier (2).

5. Module de batterie selon l'une quelconque ou plusieurs des revendications précédentes,
**caractérisé en ce que**
l'au moins une conduite de sortie (8) et/ou l'au moins une conduite d'entrée (7) présentent un diamètre de 0,2 à 5 cm, notamment de 0,8 à 2,5 cm.

6. Module de batterie selon l'une quelconque ou plusieurs des revendications précédentes,
**caractérisé en ce que**
l'axe longitudinal de l'au moins une conduite de sortie (8) et/ou de l'au moins une conduite d'entrée (7) est orienté essentiellement, et notamment avec un écart de moins de 25°, axialement ou longitudinalement ou radialement ou transversalement par rapport à au moins une batterie (3).

7. Module de batterie selon l'une quelconque ou plusieurs des revendications précédentes,
**caractérisé en ce**
**qu'**un dispositif de guidage d'air (14), notamment une tôle de guidage d'air (15), est disposé(e) au niveau de la paroi (10) du boîtier (2) opposée à l'au moins une conduite d'entrée (7) dans l'espace interne (27) du module de batterie (1).

8. Module de batterie selon la revendication 7,
**caractérisé en ce que**
la hauteur et/ou la largeur et/ou la longueur et/ou le diamètre du dispositif de guidage d'air (14) vaut 0,1 à 1,5, notamment 0,2 à 0,8 fois la longueur de l'au moins une conduite d'entrée (7) et/ou de l'au moins une conduite de sortie (8).

9. Module de batterie selon la revendication 7 ou 8,
**caractérisé en ce que**
la hauteur et/ou la largeur et/ou la longueur et/ou le diamètre du dispositif de guidage d'air (14) vaut 0,5 à 5 cm.

10. Module de batterie selon l'une quelconque ou plusieurs des revendications précédentes,
**caractérisé en ce que**
le module de batterie (1) comprend au moins 5 batteries (3), notamment 6 ou 8 batteries (3).

11. Module de batterie selon l'une quelconque ou plusieurs des revendications précédentes,
**caractérisé en ce que**
l'au moins une batterie (3) est au moins une batterie aux ions lithium (4) et/ou **en ce que** le fluide de refroidissement est l'air.

12. Module de batterie selon l'une quelconque ou plusieurs des revendications précédentes,
**caractérisé en ce que**
l'au moins une conduite de sortie (8) et/ou l'au moins une conduite d'entrée (7), en particulier la section transversale de l'au moins une conduite de sortie (8) et/ou de l'au moins une conduite d'entrée (7) est réalisée de telle sorte que la région de l'espace interne (27) du module de batterie (1) disponible pour recevoir l'au moins une conduite de sortie (8) et/ou l'au moins une conduite d'entrée soit utilisée de manière optimale afin de maximiser la section transversale d'écoulement de l'au moins une conduite de sortie (8) et/ou de l'au moins une conduite d'entrée (7).

13. Module de batterie selon la revendication 12,
**caractérisé en ce que**
l'au moins une conduite de sortie (8) et/ou l'au moins une conduite d'entrée (7) est réalisée en section transversale de manière polygonale, par exemple rectangulaire, notamment carrée, ou triangulaire, les côtés du polygone, par exemple du triangle ou du pentagone, étant complémentaires aux batteries adjacentes (3), et/ou au boîtier adjacent (2), notamment à au moins une paroi latérale (13).

14. Module de batterie selon l'une quelconque ou plusieurs des revendications précédentes,
**caractérisé en ce**
**qu'**une paroi de fond (11) et/ou une paroi de fond extérieure (24) présentent une ouverture d'entrée (5) et/ou une ouverture de sortie (6), notamment la paroi de fond (11) et/ou la paroi de fond extérieure (24) présentent, vers l'ouverture d'entrée (5) et/ou l'ouverture de sortie (6), une pente telle que la poussière, l'eau ou d'autres matières ou substances provenant de l'ouverture d'entrée (5) et/ou de l'ouverture de sortie (6) puissent être dirigées hors du module de batterie (1).

15. Module de batterie selon l'une quelconque ou plusieurs des revendications précédentes,
**caractérisé en ce que**
le module de batterie (1), en particulier la surface de la région du boîtier (2) renfermant l'espace interne (27) du module de batterie (1), présente un revêtement antiadhésif et/ou un matériau antistatique et/ou un effet lotus.

16. Module de batterie selon l'une quelconque ou plusieurs des revendications précédentes,
**caractérisé en ce que**
le nombre d'au moins deux conduites de sortie (8) est supérieur au nombre d'au moins une conduite d'entrée (7).

17. Système modulaire de batterie (28) comprenant plusieurs modules de batteries (1),
**caractérisé en ce que**
le système modulaire de batterie (28) comprend au moins un module de batterie (1) selon l'une quelconque ou plusieurs des revendications précédentes.
